# EUROPEAN PATENT APPLICATION

(11) **EP 4 787 158 A1**
(43) Date of publication of application: **05.08.2026**
(21) Application number: 25818889.5
(22) Date of filing: 07.05.2025
(51) Int. Cl.: G06F 9/4401

(54) **TERMINAL DEVICE PROCESSING METHOD AND RELATED APPARATUS**

(30) Priority: 07.06.2024 CN 202410744004
(71) Applicant: HUAWEI TECHNOLOGIES CO., LTD., Shenzhen 518129 (CN)
(72) Inventor: SONG, Mingdong, Shenzhen, Guangdong 518129 (CN); WANG, Huaiyong, Shenzhen, Guangdong 518129 (CN); WANG, Xiangyang, Shenzhen, Guangdong 518129 (CN)
(74) Representative: Maiwald GmbH
(86) International application number: PCT/CN2025/093234
(87) International publication number: WO 2025/251830

(57) **Abstract**

This application provides a processing method for a terminal device and a related apparatus, and may be used in the field of terminal technologies. In the technical solutions provided in this application, a first driver receives a first instruction, where the first instruction is used to request to start or wake up a first component, and then controls the first component to perform an initialization operation. The first driver transmits first indication information before the initialization operation of the first component is completed, where the first indication information indicates that the initialization operation of the first component is completed. In the method, the first driver may transmit the first indication information without waiting for completion of the initialization operation of the first component, which helps shorten duration of starting and waking up the first component.

## Description

This application claims priority to Chinese Patent Application No. 202410744004.4, filed with the China National Intellectual Property Administration on June 7, 2024 and entitled "PROCESSING METHOD FOR TERMINAL DEVICE AND RELATED APPARATUS", which is incorporated herein by reference in its entirety.

### TECHNICAL FIELD

This application relates to the field of terminal technologies, and in particular, to a processing method for a terminal device and a related apparatus.

### BACKGROUND

In the terminal field, an initialization operation needs to be performed first when a component of a terminal device is started or woken up. For example, after receiving a screen start or wake-up instruction, a kernel of the terminal device may first report the instruction to an application layer/a service layer, and then the application layer/service layer delivers a screen-on request to a screen driver in the kernel of the terminal device. After receiving the request, the screen driver may control a screen to perform an initialization operation.

However, in a use process, it is found that time required for starting or waking up the component of the terminal device is long, and user experience is poor.

### SUMMARY

This application provides a processing method for a terminal device and a related apparatus, to shorten duration of starting or waking up a component of a terminal device.

According to a first aspect, this application provides a processing method for a terminal device, where the method is applied to a first driver, and the first driver is used to drive a first component of the terminal device. The method includes: receiving a first instruction, where the first instruction is used to request to start or wake up the first component; controlling the first component to perform an initialization operation; and transmitting first indication information before the initialization operation of the first component is completed, where the first indication information indicates that the initialization operation of the first component is completed.

For example, the first component may include components such as a screen, an audio component, a touch pad TP, and an embedded memory eMMC.

When the first component is a screen, the first driver may be a screen driver.

When the first component is an audio component, the first driver may be an audio driver.

When the first component is a TP, the first driver may be a TP driver.

When the first component is an eMMC, the first driver may be an eMMC driver.

For example, the first component is a screen. The screen driver may transmit first indication information to an application layer or a service layer in the terminal device before an initialization operation of the screen is completed, where the first indication information indicates that the initialization operation of the screen is completed. Correspondingly, after receiving the first indication information, the application layer or the service layer in the terminal device may perform drawing and rendering based on the first indication information, to obtain picture display data, and transmit the obtained picture display data to the screen driver. Then, the screen driver may control the screen to output the picture display data.

In the method, the first driver may transmit the first indication information without waiting for completion of the initialization operation of the first component. Compared with a conventional technology in which the first driver transmits the first indication information only after the initialization operation of the first component is completed, this can shorten total duration of initializing the first component and obtaining data, and help shorten duration of starting and waking up the first component.

In some possible implementations, the first driver is deployed in a primary core of the terminal device, the terminal device further includes an auxiliary core, the auxiliary core includes a second driver, and the second driver is used to drive the first component.

The controlling the first component to perform the initialization operation includes: The first driver transmits second indication information to the second driver, where the second indication information indicates the second driver to control the first component to perform the initialization operation.

In this implementation, the auxiliary core is used to control the first component to perform the initialization operation, that is, the primary core may not be used to control the first component to perform the initialization operation. This can reduce a computing power requirement of the primary core, to reduce load of the primary core and help improve system performance.

In some possible implementations, the terminal device further includes an application layer or a service layer.

The transmitting the first indication information includes: After the first driver transmits the second indication information to the second driver, the first driver transmits the first indication information to the application layer or the service layer, where a time interval between a transmission moment of the second indication information and a transmission moment of the first indication information is less than or equal to preset duration.

In this implementation, the preset duration may be far less than duration for the first component to perform the initialization operation, to further shorten the total duration of initializing the first component and obtaining the data, and help shorten the duration of starting and waking up the first component.

In some possible implementations, the method further includes: The first driver receives first data. The first driver receives third indication information from the second driver, where the third indication information indicates that the initialization operation of the first component has been confirmed as completed. The first driver controls, based on a receiving moment of the third indication information and a receiving moment of the first data, the first component to output the first data.

Optionally, the first data may be data generated after the application layer or the service layer in the terminal device receives the first indication information.

For example, the first component is a screen. The first data may be picture display data obtained after the application layer or the service layer in the terminal device receives the first indication information and then performs operations such as drawing and rendering.

In the method, the first driver may control, based on the receiving moment of the third indication information and the receiving moment of the first data, the first component to output the first data. This helps ensure that control logic of the first component is normal, and avoids a problem that the first component cannot normally output data because a logic disorder occurs when the first driver and the second driver simultaneously control the first component.

In some possible implementations, the receiving moment of the third indication information is earlier than the receiving moment of the first data.

The controlling the first component to output the first data includes: After receiving the first data, the first driver controls the first component to output the first data.

In this implementation, the receiving moment of the third indication information is earlier than the receiving moment of the first data. In other words, duration required for the initialization operation of the first component is less than duration for the first driver to obtain the first data from the application layer or the service layer in the terminal device. In this case, after receiving the first data, the first driver may normally control the first component to output the first data.

In some possible implementations, the receiving moment of the third indication information is later than the receiving moment of the first data.

The controlling the first component to output the first data includes: After receiving the first data, the first driver stores all or a part of the first data. After receiving the third indication information, the first driver controls the first component to output all or the part of the first data.

Alternatively, the method further includes: After receiving the first data, the first driver deletes the first data. After receiving the third indication information, if the first driver receives second data, the first driver controls the first component to output the second data.

Optionally, when data output by the first component is fixed data, in other words, when data output by the first component in a period of time does not change, the initialization operation of the first component is not completed when the first driver receives the first data. In this case, the first component is controlled by the second driver in the auxiliary core, and the first driver may store all or the part of the first data. After the initialization operation of the first component is completed, the second driver in the auxiliary core may no longer need to control the first component. In this case, the first driver may control the first component to output all or the part of the first data.

Optionally, when data output by the first component is dynamic data, in other words, when data output by the first component in a period of time changes in real time, the initialization operation of the first component is not completed when the first driver receives the first data. In this case, the first component is controlled by the second driver in the auxiliary core. After the initialization operation of the first component is completed, the second driver in the auxiliary core may no longer need to control the first component. In addition, after the initialization operation of the first component is completed, data that needs to be displayed by the terminal device changes. Therefore, the first data may be deleted, and after receiving the second data, the first driver controls the first component to output the second data.

According to a second aspect, this application provides a processing apparatus for a terminal device. The processing apparatus may be used in the terminal device in the first aspect. The processing apparatus may be a terminal device, or an apparatus (for example, a chip, a chip system, or a circuit) in the terminal device, or a logical module or software that can implement all or some functions of the terminal device. In a possible implementation, a module or a unit configured to implement the method in any one of the first aspect and the possible implementations of the first aspect is included. For example, a module or a unit in a one-to-one correspondence with the method/operation/step/action described in the first aspect may be included. The module or the unit may be implemented by a hardware circuit, software, or a combination of a hardware circuit and software. Optionally, each module or unit may implement a corresponding function by executing a computer program.

According to a third aspect, this application provides a processing apparatus for a terminal device, including a processor, configured to enable the apparatus to perform the method in any one of the first aspect and the possible implementations of the first aspect by executing a computer program (or computer-executable instructions) stored in a memory, and/or by using a logic circuit.

In a possible implementation, the apparatus further includes the memory.

In a possible implementation, the processor and the memory are integrated together.

In another possible implementation, the memory is located outside the processing apparatus.

In a possible implementation, the processing apparatus further includes a communication interface, and the communication interface is used by the processing apparatus to communicate with another device, for example, to send or receive data and/or a signal. For example, the communication interface may be a transceiver, a circuit, a bus, a module, or another type of communication interface.

According to a fourth aspect, this application provides a computer-readable storage medium. The computer-readable medium stores a computer program or instructions executed by a processing apparatus for a terminal device. When the computer program or the instructions are run on the processing apparatus, the method in any one of the first aspect and the possible implementations of the first aspect is implemented.

According to a fifth aspect, this application provides a computer program product including instructions. When the computer program product runs on a processing apparatus for a terminal device, the method in any one of the first aspect to the fifth aspect and the possible implementations of the first aspect to the fifth aspect is implemented.

According to a sixth aspect, this application provides a chip. The chip stores a computer program, and when the computer program is executed by the chip, the method in any one of the first aspect and the possible implementations of the first aspect is implemented.

It may be understood that for effects that can be obtained in the second aspect to the sixth aspect, refer to the descriptions in the first aspect. Details are not described herein.

### BRIEF DESCRIPTION OF DRAWINGS

FIG. 1 is a diagram of a structure of a terminal device according to an embodiment of this application;
FIG. 2 is a block diagram of a software structure of a terminal device according to an embodiment of this application;
FIG. 3 is a screen-on method of a terminal device;
FIG. 4 is another screen-on method of a terminal device;
FIG. 5 is a schematic flowchart of a processing method for a terminal device according to an embodiment of this application;
FIG. 6 is a diagram of drivers deployed in a primary core and an auxiliary core according to an embodiment of this application;
FIG. 7 is a diagram of start or wake-up duration of a first component according to an embodiment of this application;
FIG. 8 is a diagram of start or wake-up duration of a first component according to another embodiment of this application;
FIG. 9 is a diagram of start or wake-up duration of a first component according to still another embodiment of this application;
FIG. 10 is a diagram of start or wake-up duration of a first component according to still another embodiment of this application;
FIG. 11 is a diagram of start or wake-up duration of a first component according to still another embodiment of this application;
FIG. 12 is a diagram of start or wake-up duration of a first component according to still another embodiment of this application;
FIG. 13 is a schematic flowchart of a processing method for a terminal device according to an embodiment of this application;
FIG. 14 is a diagram of a structure of a processing apparatus for a terminal device according to an embodiment of this application; and
FIG. 15 is a diagram of a structure of a processing apparatus for a terminal device according to another embodiment of this application.

### DESCRIPTION OF EMBODIMENTS

The following describes the technical solutions in embodiments of this application with reference to the accompanying drawings in embodiments of this application.

To clearly describe the technical solutions in embodiments of this application, words such as "first" and "second" are used in embodiments of this application to distinguish between same items or similar items that provide basically same functions or purposes. For example, first information and second information are merely used to distinguish between different information, and do not limit a sequence of the first information and the second information. A person skilled in the art may understand that the words such as "first" and "second" do not limit a quantity and an execution sequence, and the words such as "first" and "second" do not indicate a definite difference.

In embodiments of this application, "at least one" means one or more, and "a plurality of" means two or more than two. The term "and/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects. At least one of the following items (pieces) or a similar expression thereof indicates any combination of these items, including a single item (piece) or any combination of a plurality of items (pieces). For example, at least one of a, b, and (or) c may represent a, b, c, a and b, a and c, b and c, or a, b, and c. a, b, and c each may be singular or plural.

A terminal device in embodiments of this application may be a wearable terminal device, for example, a mobile phone, a tablet computer, a personal computer (personal computer, PC), a smart screen, an in-vehicle infotainment device, and a smartwatch; or may be a teaching auxiliary tool (for example, a learning machine or an early education machine), a smart toy, a portable robot, a personal digital assistant (personal digital assistant, PDA), an augmented reality (augmented reality, AR) device, a virtual reality (virtual reality, VR) device, or the like; or may be a device having a mobile office function, a device having a smart home function, a device having an audio and video entertainment function, a device supporting intelligent travel, or the like. It should be understood that a specific technology and a specific device form that are used by the terminal device are not limited in embodiments of this application.

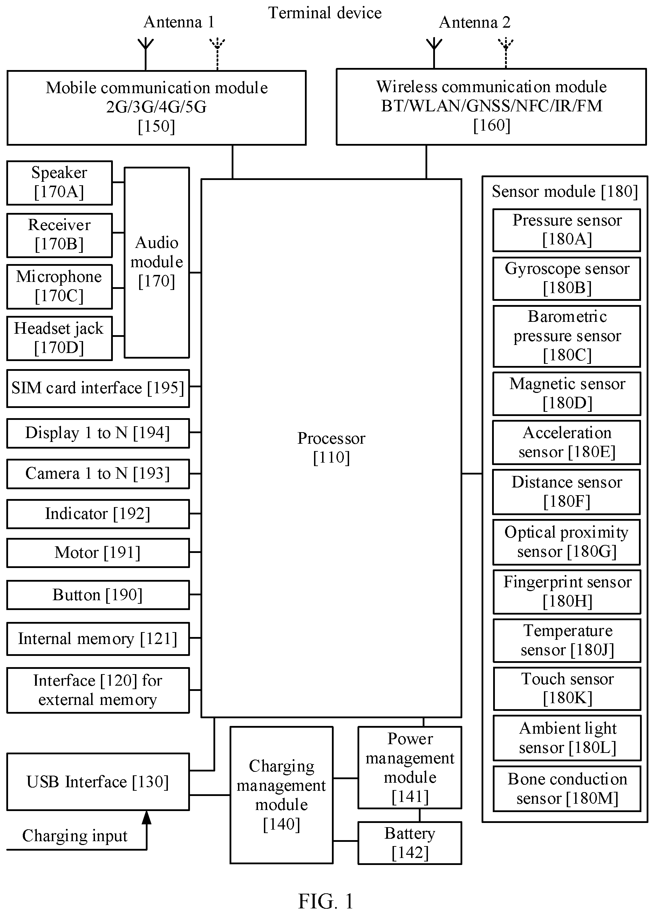

To better understand embodiments of this application, the following describes a hardware structure of the terminal device in embodiments of this application. For example, FIG. 1 is a diagram of a structure of a terminal device according to an embodiment of this application.

The terminal device may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like.

Optionally, the sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that, the structure illustrated in embodiments of this application does not constitute a specific limitation on the terminal device. In some other embodiments of this application, the terminal device may include more or fewer components than those shown in the figure, or some components may be combined, some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), and a baseband processor. Different processing units may be independent components, or may be integrated into one or more processors. A memory may be further disposed in the processor 110, and is configured to store instructions and data.

In this embodiment of this application, the processor 110 may include a plurality of processing units, for example, an application processor and a sensor processing chip (sensor hub). A primary core may be deployed in the application processor. The primary core may be implemented by a hardware circuit, software, or a combination of a hardware circuit and software. For example, the primary core may be a chip or a chip system in the application processor. An auxiliary core may be deployed in the sensor processing chip. The auxiliary core may be implemented by a hardware circuit, software, or a combination of a hardware circuit and software. For example, the auxiliary core may be a chip or a chip system in the sensor processing chip.

Optionally, in some embodiments, the primary core and the auxiliary core may alternatively be deployed in a same processing unit.

The USB interface 130 is an interface that conforms to a USB standard specification, and may be specifically a mini USB interface, a micro USB interface, a USB type-C interface, or the like. The USB interface 130 may be configured to connect to a charger to charge the terminal device, or may be configured to transmit data between the terminal device and a peripheral device, or may be configured to connect to a headset for playing an audio through the headset. Alternatively, the interface may be configured to connect to another terminal device, for example, an AR device.

The charging management module 140 is configured to receive a charging input from the charger. The charger may be a wireless charger or a wired charger. The charging management module 140 may further supply power to the terminal device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the camera 193, the display 194, the audio module 170, the wireless communication module 160, and the like. In some embodiments, the power management module 141 may alternatively be disposed in the processor 110. In some other embodiments, the power management module 141 and the charging management module 140 may alternatively be disposed in a same device.

Optionally, in some embodiments, the power management module 141 may also be referred to as a battery management unit (power management unit, PMU), and the PWU may be configured to obtain status information of the battery 142, for example, a remaining battery level and a temperature of the battery 142.

A wireless communication function of the terminal device may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. An antenna in the terminal device may be configured to cover one or more communication frequency bands. Different antennas may be further reused, to improve antenna utilization.

The mobile communication module 150 may provide a wireless communication solution that applied to the terminal device and that includes 2G/3G/4G/5G, or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1.

The wireless communication module 160 may provide a wireless communication solution that is applied to the terminal device and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), and the like. The wireless communication module 160 may be one or more components integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave through the antenna 2 for radiation.

In some embodiments, the antenna 1 of the terminal device is coupled to the mobile communication module 150, and the antenna 2 is coupled to the wireless communication module 160, so that the terminal device may communicate with a network and other devices by using a wireless communication technology.

The camera 193 is configured to capture a static image or a video. In some embodiments, the terminal device may include one or N cameras 193, where N is a positive integer greater than 1.

The display 194 is configured to display an image, a video, and the like. The display 194 includes a display panel. In some embodiments, the terminal device may include one or N displays 194, where N is a positive integer greater than 1.

In this embodiment of this application, the display 194 may display an interface of a preset application, and the like. The interface of the preset application may include a video frame picture, video duration, and the like.

In some embodiments of this application, the preset application may include, but is not limited to, applications that may play an audio or a video, such as a video playing application, an audio playing application, a game application, a shopping application, and a social application.

The terminal device may implement a display function through the graphics processing unit (graphics processing unit, GPU), the display 194, the application processor, and the like. The GPU is a microprocessor for image processing, and is connected to the display 194 and the application processor. The GPU is configured to: perform mathematical and geometric computation, and render an image. The GPU may also be referred to as a display core, a visual processor, a display chip, or the like.

The terminal device may implement a photographing function through the ISP, the camera 193, the video codec, the GPU, the display 194, the application processor, and the like.

The video codec is configured to compress or decompress a digital video. The terminal device may support one or more video codecs. In this way, the terminal device may play or record videos in a plurality of coding formats, such as moving picture experts group (moving picture experts group, MPEG)-1, MPEG-2, MPEG-3, and MPEG-4. In addition, the terminal device may encapsulate and play audio and video data and screen recording data, and the like.

In some embodiments, the display may also be referred to as a physical screen.

The interface 120 for external memory may be configured to connect to an external memory card, for example, a micro-SD card, to extend a storage capability of the terminal device. The external memory card communicates with the processor 110 through the interface 120 for external memory, to implement a data storage function. For example, files such as music and a video are stored in the external memory card.

The internal memory 121 may be configured to store computer-executable program code. The executable program code includes instructions. The internal memory 121 may include a program storage area and a data storage area. The program storage area may store an application required by at least one function (for example, a voice playing function or an image playing function) in an operating system, and the like. The data storage area may store data (for example, audio data and a phone book) and the like created in a process of using the terminal device.

The terminal device may implement an audio function such as music playing and recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The speaker 170A, also referred to as a "loudspeaker", is configured to convert an audio electrical signal into a sound signal. The terminal device may be used to listen to music or answer a call in a hands-free mode over the speaker 170A. The receiver 170B, also referred to as an "earpiece", is configured to convert an audio electrical signal into a sound signal. When a call is answered or voice information is listened to by using the terminal device, the receiver 170B may be put close to a human ear to listen to a voice. The microphone 170C, also referred to as a "mike" or a "mic", is configured to convert a sound signal into an electrical signal. The headset jack 170D is configured to connect to a wired headset.

The pressure sensor 180A is configured to sense a pressure signal, and may convert the pressure signal into an electrical signal. In some embodiments, the pressure sensor 180A may be disposed on the display 194. When a touch operation is performed on the display 194, the terminal device may detect intensity of the touch operation through the pressure sensor 180A. The terminal device may further calculate a touch position based on a detection signal of the pressure sensor 180A.

The gyroscope sensor 180B may be configured to determine a motion attitude of the terminal device. The barometric pressure sensor 180C is configured to measure barometric pressure. The magnetic sensor 180D includes a Hall sensor. The acceleration sensor 180E may detect values of accelerations of the terminal device in various directions (usually on three axes). The distance sensor 180F is configured to measure a distance. The optical proximity sensor 180G may include, for example, a light-emitting diode (LED) and an optical detector, for example, a photodiode. The ambient light sensor 180L is configured to sense ambient light brightness. The fingerprint sensor 180H is configured to collect a fingerprint. The temperature sensor 180J is configured to detect a temperature.

The touch sensor 180K may be disposed in the display 294, and the touch sensor 180K and the display 194 form a touchscreen, which is also referred to as a "touch screen". The touch sensor 180K is configured to detect a touch operation performed on or near the touch sensor. The touch sensor 180K may transmit the detected touch operation to the application processor to determine a touch event type. A visual output related to the touch operation may be provided through the display 194. In some other embodiments, the touch sensor 180K may alternatively be disposed on a surface of the terminal device at a location different from a location of the display 194.

The bone conduction sensor 180M may obtain a vibration signal.

The button 190 includes a power button, a volume button, and the like. The button 190 may be a mechanical button, or may be a touch button. The terminal device may receive a button input, and generate a button signal input related to a user setting and function control of the terminal device. The motor 191 may generate a vibration prompt. The indicator 192 may be an indicator light, and may be configured to indicate a charging status and a power change, or may be configured to indicate a message, a missed call, a notification, and the like. A timer 196 may be configured to record time information. For example, when recording a video, the terminal device may record start time and end time of the video, and may record a duration of the recorded video.

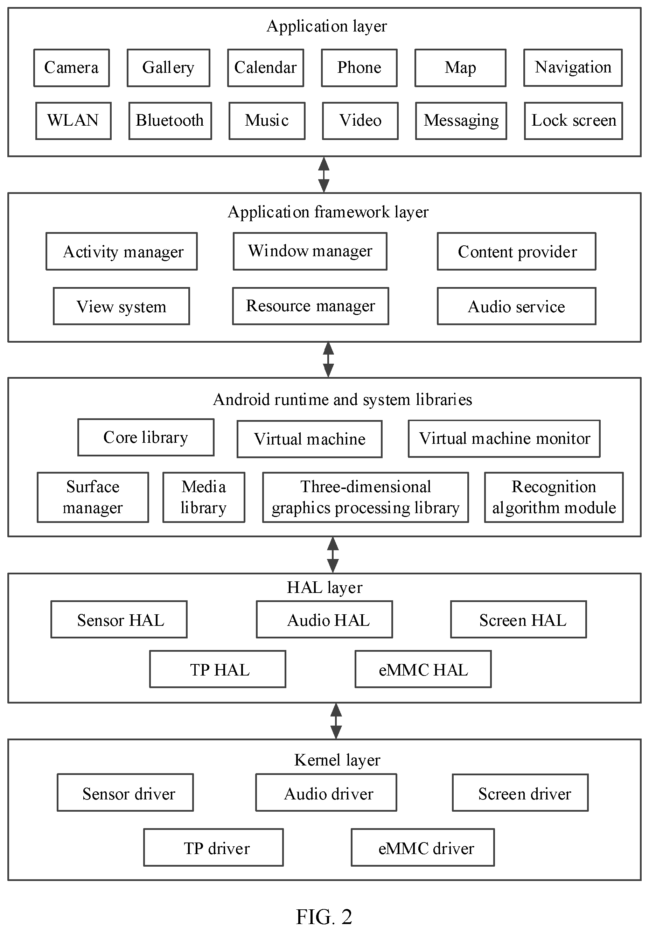

In this embodiment of this application, for example, a layered architecture, an eventdriven architecture, a microkernel architecture, a microservice architecture, or a cloud architecture may be used for a software system of the terminal device. In the layered architecture, an Android (Android) system, an Apple (iOS) system, or another operating system may be used. This is not limited in this embodiment of this application. The following uses FIG. 2 as an example to describe a software structure of the terminal device.

FIG. 2 is a block diagram of a software structure of a terminal device according to an embodiment of this application. In a layered architecture, a software system of the terminal device is divided into several layers, and each layer has a clear role and task. The layers communicate with each other through a software interface. In some embodiments, the system may include an application layer (applications), an application framework layer (application framework), Android runtime (Android runtime) and system libraries, a hardware abstraction layer (hardware abstraction layer, HAL), and a kernel layer (kernel).

The application layer may include a series of application packages, and the application layer runs an application by invoking an application programming interface (application programming interface, API) provided by the application framework layer.

For example, the application packages may include applications such as Camera, Gallery, Calendar, Phone, Map, Navigation, wireless local area network (wireless local area network, WLAN), Bluetooth, Music, Video, Messaging, and Lock screen. Certainly, the application layer may further include a third-party application package, for example, a social application, a third-party music application, a third-party video application, a payment application, a shopping application, a bank application, a chat application, or a wealth management application. This is not limited in this application.

Optionally, in some embodiments, the application layer may also be referred to as an app layer.

The application framework layer provides an application programming interface (application programming interface, API) and a programming framework for an application at the application layer. The application framework layer includes some predefined functions. For example, the application framework layer may include an activity manager, a window manager, a content provider, a view system, a resource manager, and an audio service. This is not limited in this embodiment of this application.

Optionally, in some embodiments, the application framework layer may also be referred to as a service layer.

The Android system runtime includes a core library, a virtual machine, and a virtual machine monitor. The Android system runtime is responsible for scheduling and management of the Android system. The core library includes two parts: a performance function that needs to be called in Java language and a core library of Android. The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system libraries may include a plurality of functional modules, such as a surface manager, a media library, a three-dimensional graphics processing library, and a recognition algorithm module.

The surface manager is configured to: manage a display subsystem and provide fusion of two-dimensional graphics layers and three-dimensional graphics layers for a plurality of applications. The media library supports playback and recording in a plurality of commonly used audio and video formats, and static image files. The media library may support a plurality of audio and video coding formats, such as JPG and PNG. The three-dimensional graphics processing library is used to implement three-dimensional graphics drawing, image rendering, composition, layer processing, and the like. The recognition algorithm module may be used for sign language recognition, speech recognition, and text semantic recognition. The sign language recognition means recognizing a voice or a text as a sign language, the speech recognition means recognizing a sign language or a text as a voice, and the text semantic recognition means recognizing a sign language or a voice as a text.

The HAL layer encapsulates a Linux kernel driver, provides an interface for an upper layer, and shields an implementation detail of lower-layer hardware.

For example, the HAL layer may include a sensor HAL, an audio (audio) HAL, a screen HAL, a touch pad (touch pad, TP) HAL, an embedded memory (embedded multi mMedia card, eMMC) HAL, and the like.

The kernel layer is a layer between hardware and software. The kernel layer is used to drive the hardware, so that the hardware works. For example, the kernel layer may include a sensor driver, an audio driver, a screen driver, a TP driver, an eMMC driver, and the like. The sensor driver is a driver corresponding to a sensor, the audio driver is a driver layer of an audio-related component (such as a speaker), the screen driver is a driver corresponding to a screen, the TP driver is a driver corresponding to a TP, and the eMMC driver is a driver corresponding to an eMMC.

In this embodiment of this application, the audio driver may include a driver corresponding to the speaker, a driver corresponding to the receiver, and a driver corresponding to the microphone.

In this embodiment of this application, the terminal device may include a primary core and an auxiliary core, a kernel layer may be deployed in both the primary core and the auxiliary core, and a hardware driver in the kernel layer of the primary core may be the same as or different from a hardware driver in the kernel layer of the auxiliary core. For example, the kernel layer of the primary core and the kernel layer of the auxiliary core each may include the sensor driver, the audio driver, the screen driver, and the TP driver. The kernel layer of the primary core may include the eMMC driver, and the kernel layer of the auxiliary core may not include the eMMC driver.

In this embodiment of this application, the kernel layer may also be referred to as a kernel.

It may be understood that the software structure of the terminal device in the embodiment shown in FIG. 2 is merely a simple example, and does not limit the scope of this application.

In the terminal field, an initialization operation needs to be performed first when a component of a terminal device is started or woken up. In some scenarios, for example, when a system of the terminal device is started or a system is woken up from a standby state, a screen of the terminal device needs to be initialized before the screen is turned on.

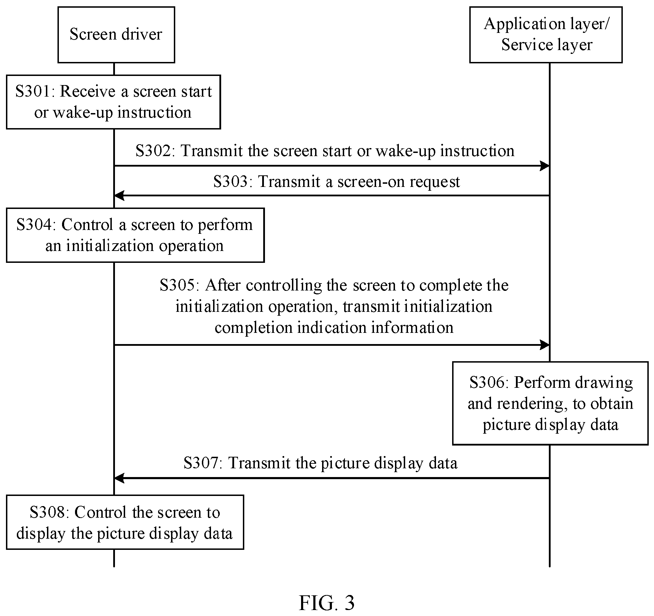

Currently, a screen-on method of a terminal device may be shown in FIG. 3.

S301: A screen driver in a kernel of a terminal device receives a screen start or wake-up instruction.

In the method, when a system of the terminal device is started or a system is woken up from a standby state, the kernel of the terminal device may receive the screen start or wake-up instruction. Optionally, the screen driver in the kernel of the terminal device may receive the screen start or wake-up instruction.

In an example, when the terminal device is in a power-off state, after a user taps a power-on button, the screen driver in the kernel of the terminal device may receive the screen start or wake-up instruction.

In another example, when the terminal device is in a screen-off state, after a user taps a button or a screen, or there is another screen-on indication, or after the terminal device receives information sent by another terminal device, the screen driver in the kernel of the terminal device may receive the screen start or wake-up instruction.

S302: The kernel of the terminal device transmits the screen start or wake-up instruction to an application layer/a service layer of the terminal device. Correspondingly, the application layer/service layer receives the screen start or wake-up instruction.

S303: The application layer/service layer delivers a screen-on request to the screen driver in the kernel of the terminal device. Correspondingly, the screen driver in the kernel of the terminal device receives the screen-on request.

S304: The screen driver controls the screen to perform an initialization operation.

In the method, the controlling the screen to perform the initialization operation may include: controlling the screen to be powered on, delivering an initialization sequence, controlling screen-on, configuring a register switch status, and the like.

S305: After controlling the screen to complete the initialization operation, the screen driver transmits initialization completion indication information to the application layer/service layer of the terminal device.

S306: The application layer/service layer of the terminal device performs drawing and rendering, to obtain picture display data.

S307: The application layer/service layer of the terminal device transmits the picture display data to the screen driver. Correspondingly, the screen driver receives the picture display data.

S308: The screen driver controls the screen to display the picture display data.

Optionally, in another method, when a system of a terminal device is started or a system is woken up from a standby state, all components of the terminal device may need to be initialized in advance, and then a screen of the terminal device is turned on.

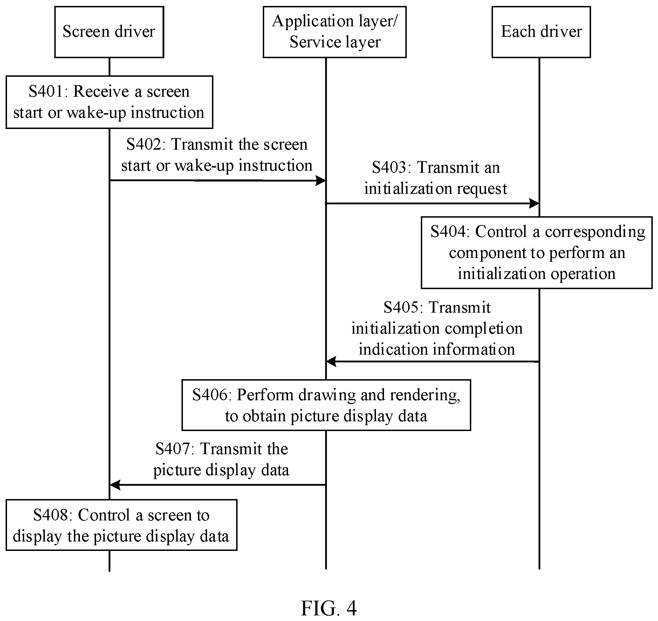

In this case, a screen-on method of a terminal device may be shown in FIG. 4.

S401: A screen driver in a kernel of a terminal device receives a screen start or wake-up instruction.

S402: The kernel of the terminal device transmits the screen start or wake-up instruction to an application layer/a service layer of the terminal device. Correspondingly, the application layer/service layer receives the screen start or wake-up instruction.

S403: The application layer/service layer separately delivers an initialization request to each driver. Correspondingly, each driver in the kernel of the terminal device receives the initialization request.

It is assumed that components of the terminal device include an eMMC, a screen, a TP, and an audio component. In this case, the application layer/service layer may separately deliver the initialization request to an eMMC driver, the screen driver, a TP driver, and an audio driver.

S404: Each driver separately controls a corresponding component to perform an initialization operation.

The eMMC driver may control the eMMC to perform an initialization operation, the screen driver may control the screen to perform an initialization operation, the TP driver may control the TP to perform an initialization operation, and the audio driver may control the audio component to perform an initialization operation.

Optionally, processes of the initialization operation of the eMMC, the initialization operation of the screen, the initialization operation of the TP, and the initialization operation of the audio component may be performed in parallel, or may be performed in serial.

S405: After the initialization operation of the component corresponding to each driver in the kernel of the terminal device is completed, each driver transmits initialization completion indication information to the application layer/service layer of the terminal device.

S406: The application layer/service layer of the terminal device performs drawing and rendering, to obtain picture display data.

S407: The application layer/service layer of the terminal device transmits the picture display data to the screen driver. Correspondingly, the screen driver receives the picture display data.

S408: The screen driver controls the screen to display the picture display data.

In this method, when the components are initialized in parallel, total initialization duration is equal to maximum duration in initialization duration of all the components. When the components are initialized in serial, total initialization duration is equal to a sum of initialization duration of all the components.

In a use process, it is found that time required for starting a component or waking up a component based on the method shown in FIG. 3 or FIG. 4 is long, and user experience is poor.

Therefore, this application provides a processing method for a terminal device, to resolve a problem in a conventional technology that the time required for starting or waking up the component of the terminal device is long.

In the technical solutions of this application, when a component of the terminal device is started or woken up, a kernel of the terminal device may transmit initialization completion indication information to an application layer/a service layer of the terminal device before initialization of the component is completed. In this way, total duration of an initialization operation and obtaining data by the application layer/service layer can be shortened, and duration of starting and waking up the component can be shortened, to help improve user experience.

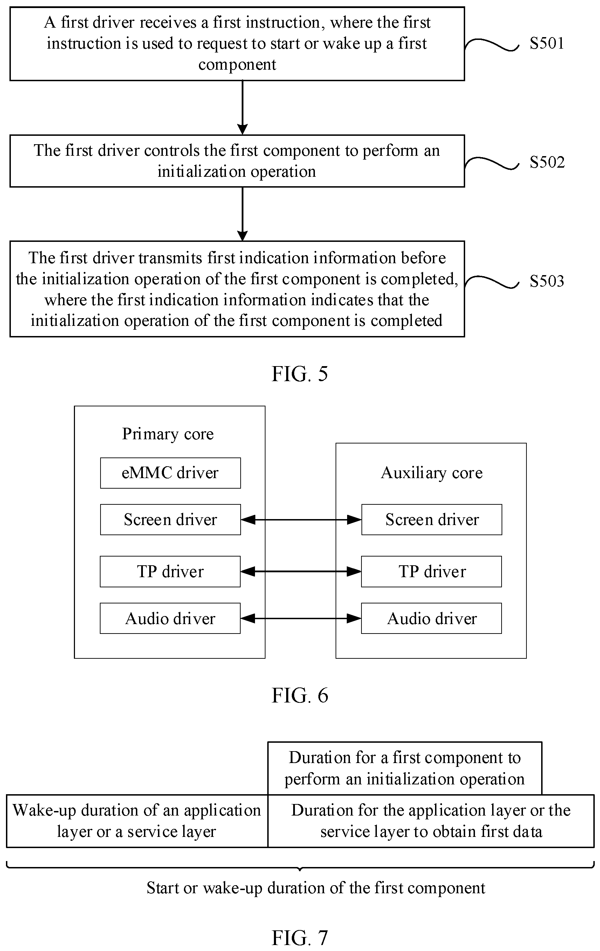

Next, in this application, the solutions of this application are described in detail with reference to FIG. 5 to FIG. 15.

FIG. 5 is a schematic flowchart of a processing method for a terminal device according to an embodiment of this application. The method may be applied to the terminal device shown in FIG. 1. Specifically, the method may be performed by the terminal device, or may be performed by a component (such as a chip or a chip system) used in the terminal device, or may be implemented by a logical module or software that can implement all or some functions of the terminal device, for example, may be implemented by an application or a service in an operating system of the terminal device. This is not limited in this embodiment of this application.

For example, the method may be implemented by a driver of the terminal device. The driver may be used to drive a component of the terminal device, and the driver may be deployed in the terminal device.

Optionally, the driver may include one or more of the drivers of the terminal device shown in FIG. 2.

Optionally, in some embodiments, the driver of the terminal device may alternatively be deployed independently of the terminal device. Subsequently, this application is described by using an example in which the driver is deployed in the terminal device.

S501: A first driver receives a first instruction, where the first instruction is used to request to start or wake up a first component.

In the method, the first component may be a peripheral component of the terminal device. For example, the first component may include components such as a screen, an audio component, a TP, and an eMMC.

In the method, the first driver may be used to drive the first component, and the first driver may be deployed in the terminal device.

When the first component is a screen, the first driver may be a screen driver. In an example, when the terminal device is in a power-off state, after a user taps a power-on button, the screen driver in the terminal device may receive a first instruction, where the first instruction is used to request to start or wake up the screen. In another example, when the terminal device is in a screen-off state, after a user taps a button or a screen, or there is another screen-on indication, or after the terminal device receives information sent by another terminal device, the screen driver in the terminal device may receive a first instruction, where the first instruction is used to request to start or wake up the screen.

When the first component is an audio component, the first driver may be an audio driver. In an example, when the user taps an audio playing button, the audio driver in the terminal device may receive a first instruction, and the first instruction is used to request to start or wake up the audio component.

When the first component is a TP, the first driver may be a TP driver. In an example, after the user taps a touch pad, the TP driver in the terminal device may receive a first instruction, where the first instruction is used to request to start or wake up the touch pad.

When the first component is an eMMC, the first driver may be an eMMC driver. In an example, when data in the terminal device needs to be stored or transmitted, the eMMC driver in the terminal device may receive a first instruction, where the first instruction is used to request to start or wake up the eMMC.

S502: The first driver controls the first component to perform an initialization operation.

In some embodiments, the terminal device may include a primary core and an auxiliary core, the first driver may be deployed in the primary core of the terminal device, the auxiliary core may include a second driver, and the second driver may also be used to drive the first component.

In this embodiment, when controlling the first component to perform the initialization operation, the first driver may further control, by using the second driver, the first component to perform the initialization operation.

Optionally, a method for controlling, by the first driver by using the second driver, the first component to perform the initialization operation may include: The first driver transmits second indication information to the second driver, where the second indication information indicates the second driver to control the first component to perform the initialization operation. Correspondingly, after receiving the second indication information, the second driver may control the first component to perform the initialization operation.

In the method, for a procedure in which the second driver controls the first component to perform the initialization operation, refer to the procedure in which the screen driver controls the screen to perform the initialization operation shown in FIG. 3. Details are not described herein again in this application.

In the method, the auxiliary core is used to control the first component to perform the initialization operation, that is, the primary core may not be used to control the first component to perform the initialization operation. This can reduce a computing power requirement of the primary core, to reduce load of the primary core and help improve system performance.

In a first possible implementation, a method for transmitting the second indication information to the second driver by the first driver may include: The first driver transmits the second indication information to the second driver by using an application layer or a service layer in the terminal device.

For example, after receiving the first instruction, the first driver may report the first instruction to the application layer or the service layer. After receiving the first instruction, the application layer or the service layer may transmit, to the first driver, indication information indicating that the first component needs to perform the initialization operation. After receiving the indication information, the first driver may transmit the second indication information to the second driver.

In this implementation, the step of determining whether the first component needs to perform the initialization operation may be performed by the application layer or the service layer. This can further reduce the computing power requirement of the primary core, to reduce load of the primary core and help improve system performance.

In a second possible implementation, after receiving the first instruction, the first driver may determine that the first component needs to perform the initialization operation, and then transmit the second indication information to the second driver.

In this implementation, the first driver does not need to interact with the application layer or the service layer, so that duration for controlling the first component to perform the initialization operation can be shortened, to help shorten duration of starting or waking up the first component.

Optionally, in some embodiments, before controlling the first component to perform the initialization operation, the first driver in the terminal device may further first classify initialization operations of components based on a preset classification method to obtain a classification result, and then determine, based on the classification result, whether to control, by using the auxiliary core, the first component to perform the initialization operation.

The classification result includes an initialization operation that can be performed asynchronously and an initialization operation that can be performed only synchronously.

The "can be performed asynchronously" herein may be understood as follows: The initialization operation performed by the first component may be controlled by using a driver in the auxiliary core. The "can be performed only synchronously" herein may be understood as follows: The initialization operation performed by the first component can be controlled only by using a driver in the primary core.

Optionally, the preset classification method may be determined based on drivers deployed in the primary core and the auxiliary core.

For example, as shown in FIG. 6, it is assumed that the primary core may include an eMMC driver, a screen driver, a TP driver, and an audio driver, and it is assumed that the auxiliary core may include a screen driver, a TP driver, and an audio driver. In this case, the initialization operation of the screen, the initialization operation of the TP, and the initialization operation of the audio are initialization operations that can be performed asynchronously, and the initialization operation of the eMMC is an initialization operation that can be performed only synchronously.

In this example, it is assumed that when the first instruction is used to request to start or wake up the screen, the screen driver in the primary core may control, by using the screen driver in the auxiliary core, the screen to perform the initialization operation. In this case, the screen driver in the primary core may be the first driver, and the screen driver in the auxiliary core may be the second driver.

It is assumed that when the first instruction is used to request to start or wake up the TP, the TP driver in the primary core may control, by using the TP driver in the auxiliary core, the TP to perform the initialization operation. In this case, the TP driver in the primary core may be the first driver, and the TP driver in the auxiliary core may be the second driver.

It is assumed that when the first instruction is used to request to start or wake up the audio component, the audio driver in the primary core may control, by using the audio driver in the auxiliary core, the audio component to perform the initialization operation. In this case, the audio driver in the primary core may be the first driver, and the audio driver in the auxiliary core may be the second driver.

It is assumed that when the first instruction is used to request to start or wake up the eMMC, the eMMC driver in the primary core controls the audio component to perform the initialization operation.

Optionally, in some embodiments, the preset classification method may be input by the user in advance.

S503: The first driver transmits first indication information before the initialization operation of the first component is completed, where the first indication information indicates that the initialization operation of the first component is completed.

In the method, the first driver may transmit the first indication information to the application layer or the service layer in the terminal device. Correspondingly, after receiving the first indication information, the application layer or the service layer in the terminal device may obtain data based on the first indication information, and transmit the obtained data to the first driver. Then, the first driver may control the first component to output the data.

For example, the first component is a screen. The screen driver in the primary core may transmit the first indication information to the application layer or the service layer in the terminal device before the initialization operation of the screen is completed, where the first indication information indicates that the initialization operation of the screen is completed. Correspondingly, after receiving the first indication information, the application layer or the service layer in the terminal device may perform drawing and rendering based on the first indication information, to obtain picture display data, and transmit the obtained picture display data to the screen driver in the primary core. Then, the screen driver in the primary core may control the screen to output the picture display data.

In the method, the first driver may transmit the first indication information without waiting for completion of the initialization operation of the first component. Compared with a conventional technology in which the first driver transmits the first indication information only after the initialization operation of the first component is completed, this can shorten total duration of initializing the first component and obtaining data, and help shorten duration of starting and waking up the first component.

Optionally, when the first driver may control, by using the second driver, the first component to perform the initialization operation, that the first driver transmits the first indication information to the application layer or the service layer in the terminal device may include: The first driver transmits the first indication information to the application layer or the service layer after the first driver transmits the second indication information to the second driver.

A time interval between a transmission moment of the second indication information and a transmission moment of the first indication information may be less than or equal to preset duration.

The preset duration may be short duration. In an example, the preset duration may be 1 millisecond (ms).

In the method, the preset duration may be far less than duration for the first component to perform the initialization operation, to further shorten the total duration of initializing the first component and obtaining the data, and help shorten the duration of starting and waking up the first component.

In the technical solutions of this application, after the first driver transmits the first indication information, the first driver may further receive first data, and obtain third indication information from the second driver, where the third indication information indicates that the initialization operation of the first component has been confirmed as completed, and then control, based on a receiving moment of the third indication information and a receiving moment of the first data, the first component to output the first data.

Optionally, the first data may be data generated after the application layer or the service layer in the terminal device receives the first indication information.

For example, the first component is a screen. The first data may be picture display data obtained after the application layer or the service layer in the terminal device receives the first indication information and then performs operations such as drawing and rendering.

In an example, when the receiving moment of the third indication information is earlier than the receiving moment of the first data, that the first driver controls the first component to output the first data may include: After receiving the first data, the first driver may control the first component to output the first data.

In this example, the receiving moment of the third indication information is earlier than the receiving moment of the first data. In other words, duration required for the initialization operation of the first component is less than duration for the first driver to obtain the first data from the application layer or the service layer in the terminal device. In this case, after receiving the first data, the first driver may normally control the first component to output the first data.

In a possible implementation, it is assumed that when the first driver transmits the second indication information to the second driver by using the application layer or the service layer in the terminal device, start or wake-up duration of the first component may be shown in FIG. 7.

In this example, the start or wake-up duration of the first component may include wake-up duration of the application layer or the service layer and duration for the application layer or the service layer to obtain the first data.

In this example, the duration for the application layer or the service layer to obtain the first data may include duration for the first component to perform the initialization operation. In other words, time at which the second driver controls the first component to perform the initialization operation is within time at which the first driver obtains the first data from the application layer or the service layer.

The wake-up duration of the application layer or the service layer may include duration required when the first driver transmits the first instruction to the application layer or the service layer and the application layer or the service layer transmits the second indication information to the first driver. The duration for the application layer or the service layer to obtain the data may include duration required between transmitting the first indication information by the first driver to the application layer or the service layer and receiving the first data by the first driver from the application layer or the service layer.

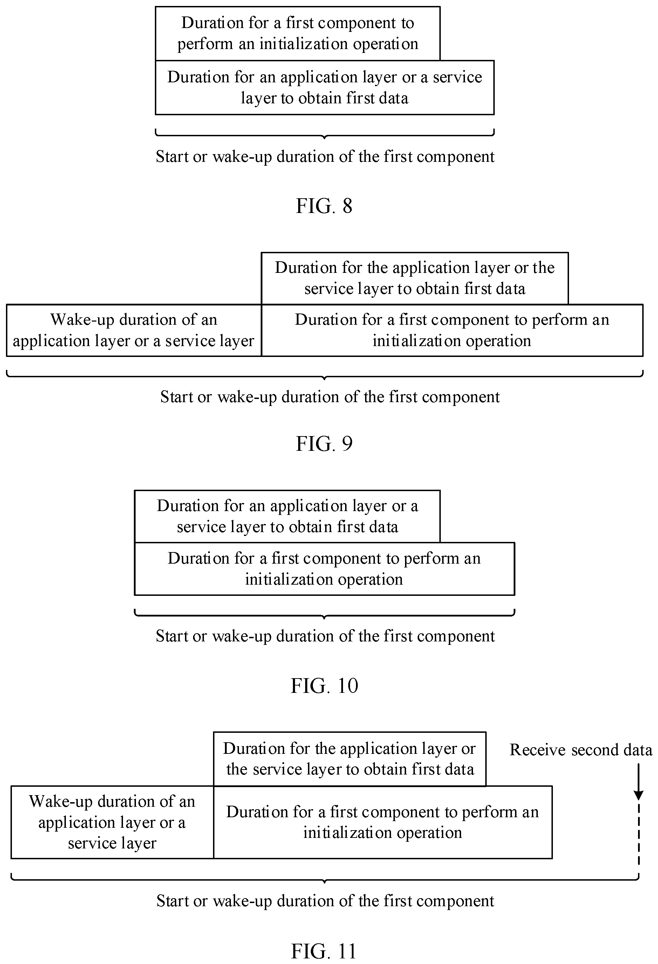

In another possible implementation, it is assumed that the first driver directly transmits the second indication information to the second driver, and start or wake-up duration of the first component may be shown in FIG. 8.

In this example, the start or wake-up duration of the first component may not include wake-up duration of the application layer or the service layer. In other words, the start or wake-up duration of the first component may include duration for the application layer or the service layer to obtain the first data.

In this example, the duration for the application layer or the service layer to obtain the first data may include duration for the first component to perform the initialization operation. In other words, time at which the second driver controls the first component to perform the initialization operation is within time at which the first driver obtains the first data from the application layer or the service layer.

The duration for the application layer or the service layer to obtain the data may include duration required between transmitting the first indication information by the first driver to the application layer or the service layer and receiving the first data by the first driver from the application layer or the service layer.

In another example, when the receiving moment of the third indication information is later than the receiving moment of the first data, that the first driver controls the first component to output the first data may include: After receiving the first data, the first driver stores all or a part of the first data. After receiving the third indication information, the first driver controls the first component to output all or the part of the first data.

This example is applicable to a case in which data output by the first component is fixed data. In other words, data output by the first component in a period of time does not change.

In this example, the receiving moment of the third indication information is later than the receiving moment of the first data. In other words, duration required for the initialization operation of the first component is greater than duration for the first driver to obtain the first data from the application layer or the service layer in the terminal device.

In this case, when the first driver receives the first data, the initialization operation of the first component is not completed. In this case, the first component is controlled by the second driver in the auxiliary core, and the first driver may store all or the part of the first data. After the initialization operation of the first component is completed, the second driver in the auxiliary core may no longer need to control the first component. In this case, the first driver may control the first component to output all or the part of the first data.

In a possible implementation, it is assumed that when the first driver transmits the second indication information to the second driver by using the application layer or the service layer in the terminal device, start or wake-up duration of the first component may be shown in FIG. 9.

In this example, the start or wake-up duration of the first component may include wake-up duration of the application layer or the service layer and duration for the first component to perform the initialization operation.

In this example, the duration for the first component to perform the initialization operation may include duration for the application layer or the service layer to obtain the first data. In other words, time at which the first driver obtains the first data from the application layer or the service layer is within time at which the second driver controls the first component to perform the initialization operation.

The wake-up duration of the application layer or the service layer may include duration required when the first driver transmits the first instruction to the application layer or the service layer and the application layer or the service layer transmits the second indication information to the first driver. The duration for the first component to perform the initialization operation may include duration required between transmitting the second indication information by the first driver to the second driver and transmitting the third indication information by the second driver to the first driver.

In another possible implementation, it is assumed that the first driver directly transmits the second indication information to the second driver, and start or wake-up duration of the first component may be shown in FIG. 10.

In this example, the start or wake-up duration of the first component may not include wake-up duration of the application layer or the service layer. In other words, the start or wake-up duration of the first component may include duration for the first component to perform the initialization operation.

In this example, the duration for the first component to perform the initialization operation may include duration for the application layer or the service layer to obtain the first data. In other words, time at which the first driver obtains the first data from the application layer or the service layer is within time at which the second driver controls the first component to perform the initialization operation.

The duration for the first component to perform the initialization operation may include duration required between transmitting the second indication information by the first driver to the second driver and transmitting the third indication information by the second driver to the first driver.

In still another example, when the receiving moment of the third indication information is later than the receiving moment of the first data, after receiving the first data, the first driver may further delete the first data; and after receiving the third indication information, if the first driver receives second data, the first driver controls the first component to output the second data.

This example is applicable to a case in which data output by the first component is dynamic data. In other words, data output by the first component in a period of time changes in real time.

In this example, when the first driver receives the first data, the initialization operation of the first component is not completed. In this case, the first component is controlled by the second driver in the auxiliary core. After the initialization operation of the first component is completed, the second driver in the auxiliary core may no longer need to control the first component. In addition, after the initialization operation of the first component is completed, data that needs to be displayed by the terminal device changes. Therefore, the first data may be deleted, and after receiving the second data, the first driver controls the first component to output the second data.

In this example, the first data may be data that is not output. Deleting the first data can prevent useless data from occupying storage space, to help improve utilization of the storage space.

In a possible implementation, it is assumed that when the first driver transmits the second indication information to the second driver by using the application layer or the service layer in the terminal device, start or wake-up duration of the first component may be shown in FIG. 11.

In this example, the start or wake-up duration of the first component may include wake-up duration of the application layer or the service layer, duration for the first component to perform the initialization operation, and duration between completion of the initialization operation of the first component and receiving the second data by the first driver.

In this example, the duration for the first component to perform the initialization operation may include duration for the application layer or the service layer to obtain the first data. In other words, time at which the first driver obtains the first data from the application layer or the service layer is within time at which the second driver controls the first component to perform the initialization operation.

The wake-up duration of the application layer or the service layer may include duration required when the first driver transmits the first instruction to the application layer or the service layer and the application layer or the service layer transmits the second indication information to the first driver. The duration for the first component to perform the initialization operation may include duration required between transmitting the second indication information by the first driver to the second driver and transmitting the third indication information by the second driver to the first driver.

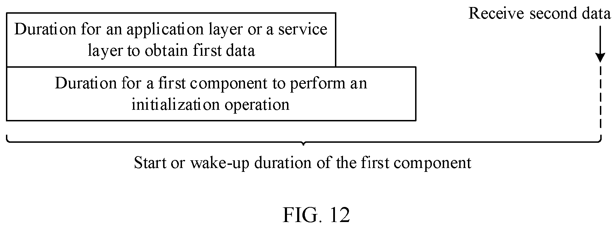

In another possible implementation, it is assumed that the first driver directly transmits the second indication information to the second driver, and start or wake-up duration of the first component may be shown in FIG. 12.

In this example, the start or wake-up duration of the first component may not include wake-up duration of the application layer or the service layer. In other words, the start or wake-up duration of the first component may include duration for the first component to perform the initialization operation and duration between completion of the initialization operation of the first component and receiving the second data by the first driver.

In this example, the duration for the first component to perform the initialization operation may include duration for the application layer or the service layer to obtain the first data. In other words, time at which the first driver obtains the first data from the application layer or the service layer is within time at which the second driver controls the first component to perform the initialization operation.

The duration for the first component to perform the initialization operation may include duration required between transmitting the second indication information by the first driver to the second driver and transmitting the third indication information by the second driver to the first driver.

In the method, the first driver may control, based on the receiving moment of the third indication information and the receiving moment of the first data, the first component to output the first data. This helps ensure that control logic of the first component is normal, and avoids a problem that the first component cannot normally output data because a logic disorder occurs when the first driver and the second driver simultaneously control the first component.

Next, in this application, the processing method for the terminal device is further described by using an example in which the first component is a screen, the first driver is a screen driver in the primary core, and the second driver is a screen driver in the auxiliary core.

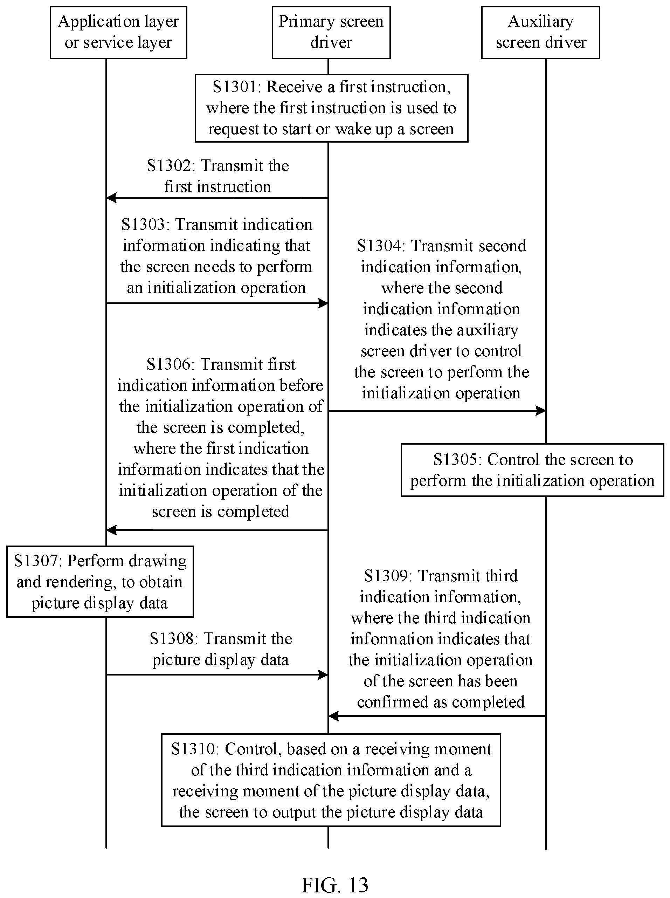

FIG. 13 is a schematic flowchart of a processing method for a terminal device according to an embodiment of this application.

In the method, a screen driver in a primary core may be referred to as a primary screen driver, and a screen driver in an auxiliary core may be referred to as an auxiliary screen driver.

S1301: The primary screen driver receives a first instruction, where the first instruction is used to request to start or wake up a screen.

S1302: The primary screen driver transmits the first instruction to an application layer or a service layer. Correspondingly, the application layer or the service layer receives the first instruction.

S1303: The application layer or the service layer transmits, to the primary screen driver, indication information indicating that the screen needs to perform an initialization operation. Correspondingly, the primary screen driver receives the indication information.

S1304: The primary screen driver transmits second indication information to the auxiliary screen driver, where the second indication information indicates the auxiliary screen driver to control the screen to perform the initialization operation. Correspondingly, the auxiliary screen driver receives the second indication information.

S1305: The auxiliary screen driver controls the screen to perform the initialization operation.

S1306: The primary screen driver transmits first indication information to the application layer or the service layer before the initialization operation of the screen is completed, where the first indication information indicates that the initialization operation of the screen is completed. Correspondingly, the application layer or the service layer receives the first indication information.

Optionally, after transmitting the second indication information to the auxiliary screen driver, the primary screen driver may transmit the first indication information to the application layer or the service layer.

A time interval between a transmission moment of the second indication information and a transmission moment of the first indication information is less than or equal to preset duration.

S1307: The application layer or the service layer performs drawing and rendering, to obtain picture display data.

S1308: The application layer or the service layer transmits the picture display data to the primary screen driver. Correspondingly, the primary screen driver receives the picture display data.

S1309: After the initialization operation of the screen is completed, the auxiliary screen driver transmits third indication information to the primary screen driver, where the third indication information indicates that the initialization operation of the screen has been confirmed as completed. Correspondingly, the primary screen driver receives the third indication information.

S1310: The primary screen driver controls, based on a receiving moment of the third indication information and a receiving moment of the picture display data, the screen to output the picture display data.

In the method, for a method for controlling, by the primary screen driver based on the receiving moment of the third indication information and the receiving moment of the picture display data, the screen to output the picture display data, refer to the method for controlling, by the first driver based on the receiving moment of the third indication information and the receiving moment of the first data, the first component to output the first data in the foregoing embodiment. Details are not described herein again.

Optionally, in some possible implementations, the method may not include S1302 and S1303.

Optionally, in some possible implementations, S1306 may be performed before S1305, or S1306 and S1305 are simultaneously performed. For example, the primary screen driver may immediately perform S1306 after performing S1304.

Optionally, in some possible implementations, S1309 may be performed before S1307 and S1308, or S1309 may be performed between S1307 and S1308.

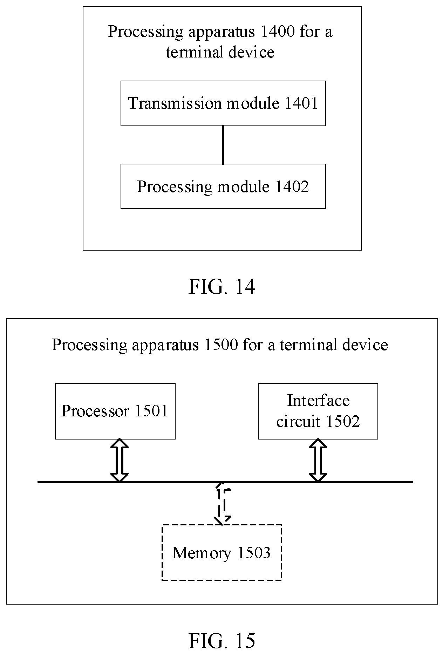

FIG. 14 is a diagram of a structure of a processing apparatus for a terminal device according to an embodiment of this application. As shown in FIG. 14, the processing apparatus 1400 for the terminal device may include a transmission module 1401 and a processing module 1402.

In an example, the processing apparatus 1400 for the terminal device may be configured to implement the processing method for the terminal device in the embodiment shown in FIG. 5. The transmission module 1401 may be configured to perform S501 and S503, and the processing module 1402 may be configured to perform S502.

In this example, the processing apparatus 1400 for the terminal device may be a first driver. Optionally, the first driver may be applied to the terminal device, or may be applied to a chip in the terminal device.

In another example, the processing apparatus 1400 for the terminal device may be further configured to implement the processing method for the terminal device in the embodiment shown in FIG. 13. The transmission module 1401 may be configured to perform S1301, S1302, S1303, S1304, S1306, S1308, and S1309, and the processing module 1402 may be configured to perform S1310.

In this example, the processing apparatus 1400 for the terminal device may be a primary screen driver. Optionally, the primary screen driver may be applied to the terminal device, or may be applied to a chip in the terminal device.

FIG. 15 is a diagram of a structure of a processing apparatus for a terminal device according to another embodiment of this application. As shown in FIG. 15, the processing apparatus 1500 for the terminal device includes a processor 1501 and an interface circuit 1502. The processor 1501 and the interface circuit 1502 are coupled to each other. It may be understood that the interface circuit 1502 may be a transceiver or an input/output interface. Optionally, the processing apparatus 1500 for the terminal device may further include a memory 1503, configured to store instructions executed by the processor 1501, or store input data required by the processor 1501 to run instructions, or store data generated after the processor 1501 runs instructions.

In a first example, the processor 1501 may be configured to implement a function of the processing module 1402, and the interface circuit 1502 may be configured to implement a function of the transmission module 1401.

In this example, the processing apparatus 1500 for the terminal device may be a terminal device, or may be a chip or a chip system used in the terminal device.

The method steps in embodiments of this application may be implemented in a hardware manner, or may be implemented in a manner of executing software instructions by the processor. The software instructions may include a corresponding software module, and the software module may be stored in a memory or a storage medium in any other form well-known in the art. For example, a storage medium is coupled to a processor, so that the processor can read information from the storage medium and write information into the storage medium. Certainly, the storage medium may alternatively be a component of the processor. The processor and the storage medium may be disposed in an ASIC. In addition, the ASIC may be located in the network device or the terminal. Certainly, the processor and the storage medium may alternatively exist in the network device or the terminal as discrete components.

In this application, the memory may include a cache (cache), a random access memory (random access memory, RAM), a flash memory, a read-only memory (read-only memory, ROM), a synchronous dynamic random access memory (synchronous dynamic random access memory, SDRAM), a programmable read-only memory, an erasable programmable read-only memory (erasable programmable ROM, EPROM), an electrically erasable programmable read-only memory, a register, a hard disk drive (hard disk drive, HDD) or a solid-state drive (solid-state drive, SSD), a removable hard disk, a portable read-only memory (compact disc read-only memory, CD-ROM), or the like. The memory is any other medium that can carry or store expected program code in a form of an instruction structure or a data structure and that can be accessed by a computer, but is not limited thereto. The memory in embodiments of this application may alternatively be a circuit or any other apparatus that can implement a storage function, and is configured to store a computer program or instructions, and/or data.

In this application, the processor may be one or more central processing units (central processing unit, CPU). When the processor is one CPU, the CPU may be a single-core CPU, or may be a multi-core CPU. The processor may be a general-purpose processor, a digital signal processor (digital signal processor, DSP), an application-specific integrated circuit (application-specific integrated circuit, ASIC), a programmable logic device (programmable logic device, PLD), a graphics processing unit (graphics processing unit, GPU), an application-specific integrated circuit, a field programmable gate array or another programmable logic device, a discrete gate or transistor logic device, or a discrete hardware group. The general-purpose processor may be a microprocessor, any conventional processor, or the like.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer program or instructions are loaded and executed on a computer, all or some of the procedures or functions described in embodiments of this application are performed. The computer may be a general-purpose computer, a special-purpose computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

An embodiment of this application further provides a computer-readable storage medium. The computer-readable storage medium stores a computer program or instructions. The computer program or instructions are executed by a computer (for example, a processor), to implement some or all of steps of any method performed by any apparatus in embodiments of this application.

An embodiment of this application further provides a computer program product including a computer program or a group of instructions. When the computer program product runs on a computer, some or all of steps of any method performed by any apparatus in embodiments of this application are implemented.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A processing method for a terminal device, wherein the method is applied to a first driver, the first driver is used to drive a first component of the terminal device, and the method comprises:
receiving a first instruction, wherein the first instruction is used to request to start or wake up the first component;
controlling the first component to perform an initialization operation; and
transmitting first indication information before the initialization operation of the first component is completed, wherein the first indication information indicates that the initialization operation of the first component is completed.

2. The method according to claim 1, wherein the first driver is deployed in a primary core of the terminal device, the terminal device further comprises an auxiliary core, the auxiliary core comprises a second driver, and the second driver is used to drive the first component; and
the controlling the first component to perform the initialization operation comprises:
transmitting, by the first driver, second indication information to the second driver, wherein the second indication information indicates the second driver to control the first component to perform the initialization operation.

3. The method according to claim 2, wherein the terminal device further comprises an application layer or a service layer; and
the transmitting the first indication information comprises:
after the first driver transmits the second indication information to the second driver, transmitting, by the first driver, the first indication information to the application layer or the service layer, wherein a time interval between a transmission moment of the second indication information and a transmission moment of the first indication information is less than or equal to preset duration.

4. The method according to claim 2 or 3, wherein the method further comprises:
receiving, by the first driver, first data;
receiving, by the first driver, third indication information from the second driver, wherein the third indication information indicates that the initialization operation of the first component has been confirmed as completed; and
controlling, by the first driver based on a receiving moment of the third indication information and a receiving moment of the first data, the first component to output the first data.

5. The method according to claim 4, wherein the receiving moment of the third indication information is earlier than the receiving moment of the first data; and
the controlling the first component to output the first data comprises:
after receiving the first data, controlling, by the first driver, the first component to output the first data.

6. The method according to claim 4, wherein the receiving moment of the third indication information is later than the receiving moment of the first data; and
the controlling the first component to output the first data comprises:
after receiving the first data, storing, by the first driver, all or a part of the first data; and
after receiving the third indication information, controlling, by the first driver, the first component to output all or the part of the first data; or
the method further comprises:
after receiving the first data, deleting, by the first driver, the first data; and
after receiving the third indication information, if the first driver receives second data, controlling, by the first driver, the first component to output the second data.

7. A processing apparatus for a terminal device, comprising a functional module configured to implement the method according to any one of claims 1 to 6.

8. A processing apparatus for a terminal device, comprising a processor, configured to enable the apparatus to perform the method according to any one of claims 1 to 6 by executing a computer program or instructions stored in a memory and/or by using a logic circuit.

9. The apparatus according to claim 8, wherein the processing apparatus for the terminal device further comprises the memory, and the memory is configured to store the computer program or the instructions.

10. A computer-readable storage medium, wherein the computer-readable storage medium stores computer-executable instructions, and when the computer-executable instructions are run on a display apparatus of the terminal device, the method according to any one of claims 1 to 6 is implemented.
